# FASCICULE DE BREVET EUROPEEN

(11) **EP 3 307 554 B1**
(45) Date de publication et mention de la délivrance du brevet: **28.08.2019**
(21) Numéro de dépôt: 16729294.5
(22) Date de dépôt: 18.05.2016
(51) Int. Cl.: B60B 27/00, B60B 27/06, B60B 33/00, F16C 35/04, F16C 35/06, F16C 35/063

(54) **ROULETTE POUR MEUBLE**
ROLLE FÜR MÖBELSTÜCK
CASTER FOR FURNITURE

(30) Priorité: 10.06.2015 FR 1501204
(43) Date de publication de la demande: 18.04.2018
(73) Titulaire: Tente Roulettes Polymeres - Bruandet, 39700 La Barre (FR)
(72) Inventeur: DAYT, Patrick, 25000 Besançon (FR); MARQUISET, Cyril, 25410 Pouilley (FR)
(74) Mandataire: Flavenot, Bernard
(86) Numéro de dépôt international: PCT/FR2016/000088
(87) Numéro de publication internationale: WO 2016/198754

(56) Documents cités:
- EP-A1- 0 956 979
- EP-A1- 2 392 229
- DE-A1- 3 614 127

## Description

La présente invention concerne les roulettes pour meubles.

Par "meuble" au sens de la présente description, on entend tout corps apte à être déplacé, par roulement au moyen d'au moins une roulette, sur un sol, pour quelque raison et en quelque lieu que ce soit, par exemple un lit, une table, une armoire, une valise, etc.

Une telle roulette comporte un carter de roue, au moins une roue, généralement deux roues montées en parallèle sur le carter, et des moyens pour que la roue puisse tourner par rapport au carter dans le but d'assurer le déplacement du meuble, ainsi que généralement, mais non obligatoirement, des moyens pour que le carter puisse pivoter autour d'un axe sensiblement vertical par rapport au meuble pour que la roulette soit apte à prendre toutes directions par rapport à ce meuble.

De telles roulettes sont décrites notamment dans les EP 2 392 229, qui est considéré comme l'état de la technique le plus proche de l'objet de la revendicatin 1, EP 0 956 979 et DE 36 14 127.

Or, certains fabricants de roulettes ou de meubles comportant des roulettes souhaitent que les roues de ces roulettes portent, sur leur côté visible, un marquage comme des références ou analogues, plus préférentiellement leur propre marque commerciale, essentiellement dans un but publicitaire et/ou d'information.

Il est bien entendu toujours possible d'apposer un tel marquage sur la face latérale visible d'une roue de roulette. Mais il est entraîné en rotation avec la roue, ce qui le rend pratiquement illisible lorsque le meuble muni de cette roulette est déplacé, et se présente selon toute direction possible par rapport à l'horizontale lorsque le meuble est à l'arrêt et que la roue ne tourne plus, ce qui le rend tout aussi peu facilement préhensible et/ou lisible.

Aussi, la présente invention a-t-elle pour but de réaliser une roulette qui pallie cet inconvénient tout en présentant une structure très simple et facilement réalisable industriellement.

Plus précisément, la présente invention a pour objet une roulette pour pied de meuble, comportant:
- un carter de roue,
- une percée réalisée dans le carter selon un axe dit "de roulement", ladite percée débouchant sur la paroi latérale du dit carter,
- au moins une roue,
- un arbre monté dans ladite percée, ledit arbre étant conçu pour avoir une portion en saillie par rapport à la paroi latérale du dit carter sur laquelle débouche ladite percée,
- des moyens pour solidariser fixement ledit arbre au dit carter, caractérisée par le fait qu'elle comprend:
- des moyens pour monter ladite roue en rotation sur ladite portion d'arbre,
- un orifice réalisé dans l'extrémité libre de cette portion d'arbre selon un axe sensiblement parallèle au dit axe de roulement, ce dit orifice débouchant sur la face d'extrémité de ladite portion d'arbre, et
- un bouchon enfiché dans ledit orifice.

D'autres caractéristiques et avantages de l'invention apparaîtront au cours de la description suivante donnée en regard des dessins annexés à titre illustratif mais nullement limitatif, dans lesquels :
La figure 1 est une vue schématique de principe illustrant une partie de la structure de la roulette selon l'invention,
Les figures 2 et 3 représentent un mode de réalisation industriel de la roulette selon l'invention en accord avec la figure 1, la figure 2 étant une vue en perspective cavalière et la figure 3 une vue en coupe transversale référencée III-III sur la figure 2.

Il est tout d'abord précisé que, dans la présente description, si l'adverbe "sensiblement" est associé à un qualificatif d'un moyen donné, ce qualificatif doit être compris au sens strict ou approché.

En référence aux figures annexées, la présente invention concerne une roulette pour meuble.

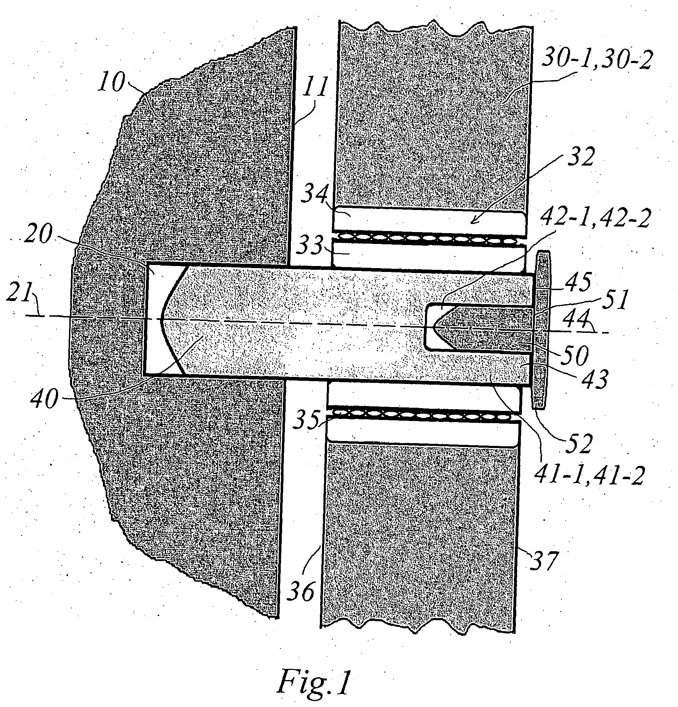

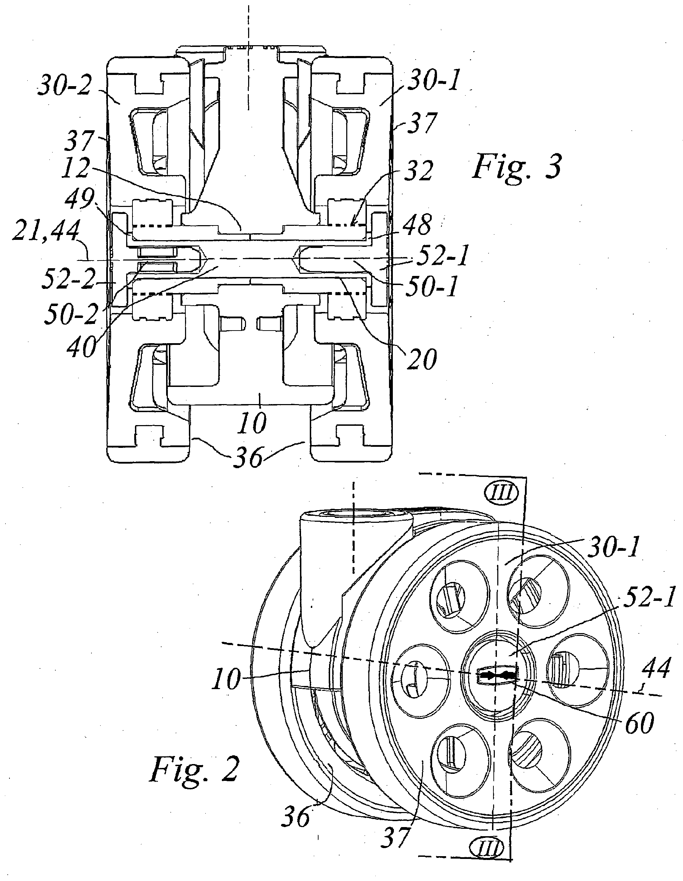

La roulette comprend de façon connue un carter de roue 10, une percée 20 réalisée dans le carter selon un axe dit "de roulement" 21 en débouchant sur la paroi latérale 11 du carter, et au moins une roue 30-1, 30-2 (figure 1), mais avantageusement deux comme illustré sur les figures 2 et 3.

Elle comporte en outre, selon l'invention, un arbre 40 monté dans la percée 20, l'arbre étant conçu pour avoir une portion 41-1, 41-2 en saillie par rapport à la paroi latérale 11 du carter 10 sur laquelle débouche la percée 10 et des moyens pour solidariser fixement cet arbre 40 au carter 10.

Sont en outre prévus des moyens 32 pour monter la roue 30-1, 30-2 en rotation sur cette portion d'arbre en saillie 41-1, 41-2. Un exemple de réalisation de ces moyens 32 sera donné ci-après.

Un orifice 42-1, 42-2 est réalisé dans l'extrémité libre 43 de la portion d'arbre en saillie 41-1, 41-2 selon un axe 44 avantageusement sensiblement parallèle à l'axe de roulement 21 et débouchant sur la face d'extrémité 45 de la portion d'arbre.

La roulette comporte en outre un bouchon 50 qui est de préférence enfiché en force, et fixement, dans l'orifice 42-1, 42-2.

De façon préférentielle, la roulette comporte en outre un disque 52 d'une section supérieure à la section transversale de l'orifice 42-1, 42-2, ce disque étant fixé sur la face avant 51 du bouchon et permettant de cacher l'entrée de l'orifice. Le disque 52 est fixé sur la face avant 51 du bouchon 50 par tout moyen, de préférence en réalisant le bouchon et le disque d'une seule pièce.

Du fait de la structure décrite ci-dessus, le disque 52 n'est donc soumis à aucune rotation quand la roue 30-1, 30-2 tourne autour de l'arbre 40 qui est fixe.

Selon une réalisation préférentielle, les moyens 32 pour monter la roue 30-1, 30-2 en rotation sur la portion d'arbre en saillie 41-1, 41-2 sont constitués par un dispositif de roulement du type généralement connu sous les terminologies de roulement à billes, à rouleaux, à aiguilles, etc.

Ce dispositif de roulement comporte deux éléments 33, 34, par exemple deux bagues ou analogues, reliés entre eux par des moyens de roulement 35, i.e. des billes, rouleaux, aiguilles, etc., un premier 33 des deux éléments étant situé au centre du second élément 34.

La roulette comporte alors des moyens, connus en eux-mêmes, comme des ergots coopérant avec des rainures, pour lier fixement le premier élément 33 à la portion d'arbre en saillie 41-1, 41-2 et des moyens pour lier fixement le second élément 34 à la roue 30, ce qui permet à cette roue de tourner sur elle-même sans que l'arbre 40 ne pivote dans la percée 20.

Il a été décrit ci-dessus une roulette à une seule roue, mais il est bien évident que de telles roulettes comportent très avantageusement deux roues 30-1, 30-2, figures 2 et 3.

La percée 20 est alors réalisée traversant de part en part le carter 10. Dans ce cas, l'arbre 40 comporte deux portions 41-1, 41-2 faisant respectivement saillie de part et d'autre du carter 10.

De même, la roulette comporte des moyens 32 pour monter chaque roue 30-1, 30-2 en rotation sur sa portion d'arbre en saillie respective 41-1, 41-2. Ces moyens 32 sont constitués, comme décrit ci-avant, pour chaque roue 30-1, 30-2, d'un dispositif de roulement à deux éléments 33, 34 reliés entre eux par des moyens de roulement 35, le premier 33 des deux éléments étant situé au centre du second élément 34, et la roulette comporte des moyens pour lier le premier élément 33 à la portion d'arbre en saillie respective 41-1, 41-2 et des moyens pour lier le second élément 34 à la roue 30-1, 30-2.

La roulette comporte alors deux orifices 42-1, 42-2 réalisés respectivement dans les extrémités libres des deux portions d'arbre en saillie 41-1, 41-2 et deux bouchons 50-1, 50-2 respectivement enfichés dans ces deux orifices.

Très avantageusement notamment d'un point de vue industriel, grâce aux deux orifices 42-1, 42-2, les moyens pour solidariser fixement l'arbre 40 sur le carter 10 sont constitués par un sertissage des deux extrémités libres de l'arbre 40 sur la partie médiane 12 du carter 10, en enserrant les deux premiers éléments 33 de part et d'autre de la partie médiane du carter, figure 3.

Selon une réalisation possible et avantageuse, ce sertissage est constitué par le fait que les deux extrémités libres de l'arbre 40 sont conformées en collerettes 48, 49 divergentes extérieurement, comme visible sur la figure 3.

Dans ce mode de réalisation, le disque 52 associé à chaque bouchon présente une section au moins égale, avantageusement supérieure, à la section des collerettes 48, 49 pour les recouvrir et empêcher qu'elles soient apparentes.

Comme mentionné ci-avant, grâce à la structure décrite ci-dessus, les disques 52 ne sont soumis à aucune rotation, même quand les roues tournent autour de l'arbre 40.

Il est donc possible de faire figurer un marquage 60, figure 2, de tout type, par exemple une référence, une marque de fabrique, un logotype, une imagé, etc., sur la face des disques 52 opposée à celle qui est tournée vers la portion d'arbre en saillie 41-1, 41-2, qui aura toujours la même orientation par rapport au carter 10 et donc par rapport au sol sur lequel doivent rouler les roues 30-1, 30-2 de la roulette.

Il est en outre avantageux, du point de vue d'une réalisation industrielle pour faciliter la fabrication et le montage de la roulette, que l'axe de roulement 21 et l'axe d'orifice 44 soient confondus.
- En outre, comme visible sur la figure 3, pour faciliter la fabrication et le montage de la roulette, et aussi sur le plan esthétique, il est préférable que la face des disques 52 qui est opposée à celle qui est tournée vers la portion d'arbre en saillie 41-1, 41-2 soit sensiblement située dans le plan de la face 37 des roues 30-1, 30-2 qui est opposée à celle 36 qui est tournée vers le carter 10.

## Revendications

1. Roulette pour meuble, comportant :
• un carter de roue (10),
• une percée (20) réalisée dans le carter selon un axe dit « de roulement » (21), ladite percée débouchant sur la paroi latérale (11) du dit carter,
• au moins une roue (30-1, 30-2),
• un arbre (40) monté dans ladite percée (20), ledit arbre étant conçu pour avoir une portion (41-1, 41-2) en saillie par rapport à la paroi latérale (11) du dit carter (10) sur laquelle débouche ladite percée (20),
• des moyens pour solidariser fixement ledit arbre (40) au dit carter (10), **caractérisée par le fait qu'**elle comprend:
• des moyens (32) pour monter ladite roue (30) en rotation sur ladite portion d'arbre en saillie (41-1, 41-2),
• un orifice (42-1, 42-2) réalisé dans l'extrémité libre (43) de cette portion d'arbre en saillie (41-1, 41-2) selon un axe (44) sensiblement parallèle au dit axe de roulement (21), ce dit orifice débouchant sur la face d'extrémité (45) de ladite portion d'arbre en saillie (41-1, 41-2), et
• un bouchon (50) enfiché dans ledit orifice.

2. Roulette selon la revendication 1, **caractérisée par le fait que** les moyens (32) pour monter ladite roue (30-1, 30-2) en rotation sur ladite portion d'arbre en saillie (41-1, 41-2) sont constitués par un dispositif de roulement à deux éléments (33, 34) reliés entre eux par des moyens de roulement (35), un premier (33) des deux éléments étant situé au centre du second élément (34), par des moyens pour lier le premier élément (33) à ladite portion d'arbre en saillie (41-1 ; 41-2), et par des moyens pour lier le second élément (34) à ladite roue (30-1, 30-2).

3. Roulette selon l'une des revendications précédentes, lorsqu'elle comporte deux roues (30-1, 30-2), ladite percée (20) étant réalisée traversante de part en part ledit carter (10), ledit arbre (40) comportant deux portions émergentes (41-1, 41-2) respectivement situées en saillie de part et d'autre du dit carter (10), les moyens (32) pour monter chaque roue (30-1, 30-2) en rotation sur sa dite portion d'arbre en saillie (41-1, 41-2) étant constitués par un dispositif de roulement à deux éléments (33, 34) reliés entre eux par des moyens de roulement (35), un premier (33) des deux éléments étant situé au centre du second élément (34), par des moyens pour lier le premier élément (33) à ladite portion d'arbre (41-1, 41-2) et par des moyens pour lier le second élément (34) à ladite roue (30-1, 30-2), **caractérisée par le fait que** les moyens pour solidariser fixement ledit arbre (40) sur ledit carter (10) sont constitués par un sertissage des deux extrémités libres du dit arbre (40) sur la partie médiane (12) du dit carter (10), en enserrant les deux premiers éléments (33).

4. Roulette selon la revendication 3, **caractérisée par le fait que** ledit sertissage est constitué par les deux extrémités libres du dit arbre (40) conformées en collerettes divergentes (48, 49).

5. Roulette selon l'une des revendications 3 et 4, **caractérisée par le fait qu'**elle comporte deux orifices (42-1, 42-2) réalisés respectivement dans les extrémités libres des deux portions d'arbre en saillie (41-1, 41-2) et deux bouchons (50-1, 50-2) respectivement enfichés dans ces deux orifices.

6. Roulette selon l'une des revendications précédentes, **caractérisée par le fait qu'**elle comporte au moins un disque (52), ce disque étant fixé sur la face avant (51) d'un dit bouchon (50-1, 50-2) et présentant une section supérieure à la section transversale du dit orifice (42-1, 42-2) dans lequel est enfiché le bouchon.

7. Roulette selon la revendication 6, **caractérisée par le fait qu'**elle comporte un marquage (60) sur la face du au moins un disque (52) opposée à celle qui est tournée vers la portion d'arbre en saillie (41-1, 41-2).

8. Roulette selon l'une des revendications précédentes, **caractérisée par le fait que** l'axe de roulement (21) et l'axe d'orifice (44) sont confondus.

9. Roulette selon l'une des revendications précédentes, **caractérisée par le fait qu'**un dit bouchon (50-1, 50-2) est enfiché en force dans un orifice (42-1, 42-2).

10. Roulette selon l'une des revendications précédentes quand elle dépend de la revendication 6, **caractérisée par le fait que** la face du disque (52) qui est opposée à celle qui est tournée vers la portion d'arbre en saillie (41-1, 41-2) est située sensiblement dans le plan de la face (37) de la roue (30-1, 30-2) qui est opposée à celle (36) qui est tournée vers le carter (10).

11. Roulette selon l'une des revendications précédentes quand elle dépend des revendications 4 et 6, **caractérisée par le fait que** les disques présentent une section supérieure à la section transversale des collerettes (48, 49).

## Patentansprüche

1. Rolle für Möbelstück, umfassend:
- ein Radgehäuse (10),
- einen Durchbruch (20), der in dem Gehäuse längs einer sogenannten "Rollachse" (21) ausgebildet ist, wobei der Durchbruch zur Seitenwand (11) des Gehäuses führt,
- mindestens ein Rad (30-1, 30-2),
- eine Welle (40), die in dem Durchbruch (20) montiert ist, wobei die Welle so gestaltet ist, dass sie einen in Bezug auf die Seitenwand (11) des Gehäuses (10), in die der Durchbruch (20) mündet, vorstehenden Abschnitt (41-1, 41-2) besitzt,
- Mittel zum Befestigen der Welle (40) an dem Gehäuse (10),
**dadurch gekennzeichnet, dass** sie umfasst:
- Mittel (32) zum drehbaren Montieren des Rades (30) an dem vorstehenden Wellenabschnitt (41-1, 41-2),
- eine Öffnung (42-1, 42-2), die in dem freien Ende (43) dieses vorstehenden Wellenabschnitts (41-1, 41-2) längs einer zu der Rollachse (21) im Wesentlichen parallelen Achse (44) ausgebildet ist, wobei diese Öffnung zur Stirnfläche (45) des vorstehenden Wellenabschnitts (41-1, 41-2) führt, und
- einen Stopfen (50), der in die Öffnung gesteckt ist.

2. Rolle nach Anspruch 1, **dadurch gekennzeichnet, dass** die Mittel (32) zum drehbaren Montieren des Rades (30-1, 30-2) an dem vorstehenden Wellenabschnitt (41-1, 41-2) gebildet sind durch eine Rollvorrichtung mit zwei Elementen (33, 34), die durch Wälzlagermittel (35) miteinander verbunden sind, wobei ein erstes (33) der beiden Elemente mittig des zweiten Elements (34) angeordnet ist, durch Mittel zum Verbinden des ersten Elements (33) mit dem vorstehenden Wellenabschnitt (41-1; 41-2), und durch Mittel zum Verbinden des zweiten Elements (34) mit dem Rad (30-1, 30-2).

3. Rolle nach einem der vorhergehenden Ansprüche, wenn sie zwei Räder (30-1, 30-2) umfasst, wobei der Durchbruch (20) das Gehäuse (10) von einer Seite zur anderen Seite durchquerend ausgebildet ist, wobei die Welle (40) zwei vortretende Abschnitte (41-1, 41-2) aufweist, die jeweils von beiden Seiten des Gehäuses (10) vorstehend angeordnet sind, wobei die Mittel (32) zum drehbaren Montieren jedes Rades (30-1, 30-2) an seinem vorstehenden Wellenabschnitt (41-1, 41-2) gebildet sind durch eine Rollvorrichtung mit zwei Elementen (33, 34), die durch Wälzlagermittel (35) miteinander verbunden sind, wobei ein erstes Element (33) der beiden Elemente mittig des zweiten Elements (34) angeordnet ist, durch Mittel zum Verbinden des ersten Elements (33) mit dem Wellenabschnitt (41-1, 41-2), und durch Mittel zum Verbinden des zweiten Elements (34) mit dem Rad (30-1, 30-2), **dadurch gekennzeichnet, dass** die Mittel zum Befestigen der Welle (40) an dem Gehäuse (10) gebildet sind durch Crimpen der beiden freien Enden der Welle (40) am Mittelabschnitt (12) des Gehäuses (10), indem die beiden ersten Elemente (33) umspannt werden.

4. Rolle nach Anspruch 3, **dadurch gekennzeichnet, dass** das Crimpen durch die beiden freien Enden der Welle (40) an gegensätzlich gebildeten Kragen (48, 49) erfolgt.

5. Rolle nach einem der Ansprüche 3 und 4, **dadurch gekennzeichnet, dass** sie zwei Öffnungen (42-1, 42-2), die jeweils in den freien Enden der beiden vorstehenden Wellenabschnitte (41-1, 41-2) ausgebildet sind, und zwei Stopfen (50-1, 50-2), die entsprechend in die beiden Öffnungen gesteckt sind, umfasst.

6. Rolle nach einem der vorhergehenden Ansprüche, **dadurch gekennzeichnet, dass** sie mindestens eine Scheibe (52) umfasst, wobei diese Scheibe an der vorderen Fläche (51) eines Stopfens (50-1, 50-2) befestigt ist und einen Querschnitt größer als der Querschnitt der Öffnung (42-1, 42-2), in die der Stopfen gesteckt ist, aufweist.

7. Rolle nach Anspruch 6, **dadurch gekennzeichnet, dass** sie auf der Fläche der mindestens einen Scheibe (52) gegenüber jener Fläche, die dem vorstehenden Wellenabschnitt (41-1, 41-2) zugewandt ist, eine Markierung (60) aufweist.

8. Rolle nach einem der vorhergehenden Ansprüche, **dadurch gekennzeichnet, dass** die Rollachse (21) und die Öffnungsachse (44) zusammenfallen.

9. Rolle nach einem der vorhergehenden Ansprüche, **dadurch gekennzeichnet, dass** ein Stopfen (50-1, 50-2) in eine Öffnung (42-1, 42-2) kraftschlüssig gesteckt ist.

10. Rolle nach einem der vorhergehenden Ansprüche, wenn abhängig von Anspruch 6, **dadurch gekennzeichnet, dass** sich die Fläche der Scheibe (52), die jener Fläche gegenüberliegt, die dem vorstehenden Wellenabschnitt (41-1, 41-2) zugewandt ist, im Wesentlichen in der Ebene der Fläche (37) des Rades (30-1, 30-2) befindet, die jener Fläche (36) gegenüberliegt, die dem Gehäuse (10) zugewandt ist.

11. Rolle nach einem der vorhergehenden Ansprüche, wenn abhängig von den Ansprüchen 4 und 6, **dadurch gekennzeichnet, dass** die Scheiben einen Querschnitt größer als der Querschnitt der Kragen (48, 49) aufweisen.

## Claims

1. A furniture castor, comprising :
- a wheel chassis (10);
- a hole (20) made in the chassis along a "running" axis (21), said hole opening out in the side wall (11) of said chassis;
- at least one wheel (30-1, 30-2);
- a shaft (40) mounted in said hole (20), said shaft being designed to have a portion (41-1, 41-2) projecting from the side wall (11) of said chassis (10) into which said hole (20) opens out;
- means for securing said shaft (40) to said chassis (10);
**characterized in** the fact that it includes :
- means (32) for mounting said wheel (30) to rotate on said projecting shaft portion (41-1, 41-2);
- an orifice (42-1, 42-2) formed in the free end (43) of the projecting shaft portion (41-1, 41-2) along an axis (44) substantially parallel to said running axis (21), said orifice opening out in the end face (45) of said projecting shaft portion (41-1, 41-2); and
- a plug (50) plugged into said orifice.

2. A castor according to claim 1, **characterized by** the fact that the means (32) for mounting said wheel (30-1, 30-2) to rotate on said projecting shaft portion (41-1, 41-2) are constituted: by a rolling bearing device having two elements (33, 34) connected together via rolling means (35), a first of the two elements (33) being situated at the center of the second element (34); by means for connecting the first element (33) to said projecting shaft portion (41-1; 41-2); and by means for connecting the second element (34) to said wheel (30-1, 30-2).

3. A castor according to either preceding claim, when it includes two wheels (30-1, 30-2), said hole (20) being made right through said chassis (10), said shaft (40) having two emerging portions (41-1, 41-2) situated respectively projecting from opposite sides of said chassis (10), the means (32) for mounting each wheel (30-1, 30-2) to rotate on its said projecting shaft portion (41-1, 41-2) being constituted: by a rolling bearing device having two elements (33, 34) connected together via rolling means (35), a first of the two elements (33) being situated at the center of the second element (34); by means for connecting the first element (33) to said shaft portion (41-1, 41-2); and by means for connecting the second element (34) to said wheel (30-1, 30-2); the castor being **characterized by** the fact that the means for securing said shaft (40) to said chassis (10) are constituted by crimping the two free ends of said shaft (40) to the middle portion (12) of said chassis (10) by pressing the two first elements (33) towards each other.

4. A castor according to claim 3, **characterized by** the fact that said crimping is achieved by the two free ends of said shaft (40) being shaped as diverging collars (48, 49).

5. A castor according to claim 3 or claim 4, **characterized by** the fact that it includes two orifices (42-1, 42-2) made respectively in the free ends of the two projecting shaft portions (41-1, 41-2) and two plugs (50-1, 50-2) respectively plugged in the two orifices.

6. A castor according to any preceding claim, **characterized by** the fact that it includes at least one disk (52), the disk being fastened on the front face (51) of a said plug (50-1, 50-2) and presenting a section that is greater than the cross-section of said orifice (42-1, 42-2) in which the plug is plugged.

7. A castor according to claim 6, **characterized by** the fact that it includes marking (60) on the face of at least one disk (52) opposite from its face facing towards the projecting shaft portion (41-1, 41-2).

8. A castor according to any preceding claim, **characterized by** the fact that the running axis (21) and the orifice axis (44) coincide.

9. A castor according to any preceding claim, **characterized by** the fact that a said plug (50-1, 50-2) is plugged by force into an orifice (42-1, 42-2).

10. A castor according to any preceding claim when dependent on claim 6, **characterized by** the fact that the face of the disk (52) that is opposite from its face facing towards the projecting shaft portion (41-1, 41-2) is situated substantially in the same plane as the face (37) of the wheel (30-1, 30-2) that is opposite from its face (36) facing towards the chassis (10).

11. A castor according to any preceding claim when dependent on claims 4 and 6, **characterized by** the fact that the disks present a section greater than the cross-section of the collars (48, 49).
